# EUROPEAN PATENT SPECIFICATION

(11) **EP 0 459 982 B1**
(45) Date of publication and mention of the grant of the patent: **20.03.1996**
(21) Application number: 90900556.3
(22) Date of filing: 15.12.1989
(51) Int. Cl.: C08G 59/50, C09D 5/44

(54) **PIGMENT GRIND RESIN**
GEMAHLENES PIGMENTIERTES HARZ
RESINE DISPERSEE A PIGMENTS

(30) Priority: 22.12.1988 US 289290
(43) Date of publication of application: 11.12.1991
(73) Proprietor: BASF Corporation, Clifton, New Jersey 07015-6001 (US)
(72) Inventor: GILBERT, John A., Dr., D-4400 Münster (DE); OTT, Günther, Dr., D-4400 Münster (DE); SANTURE, David J., Dr., Northville, MI 48167 (US)
(74) Representative: Münch, Volker, Dr.
(86) International application number: US8905615
(87) International publication number: WO9006959

(56) References cited:
- US-A- 4 339 369
- US-A- 4 608 405
- US-A- 4 612 338
- US-A- 4 711 917

## Description

The present invention is related to epoxide compound resins which are useful as pigment dispersion resins for cathodic electrocoat paint systems.

Cathodic electrodeposition of a film composed of amine resin, crosslinker, pigment, grind resin and other resinous components onto an electrically conductive article is an important industrial process. It constitutes the usual manner in which automobile and truck bodies as well as appliance and other large metallic surface bodies are undercoated with paint. In addition to providing a painted surface, the resin systems employed protect the underlying metal surface from corrosion, impact damage and other detrimental exposure to environmental conditions.

In performing the electrodeposition, the conductive article forms one electrode and is immersed in a coating bath made from an aqueous dispersion of the film-forming resin and other components. An electrical current is passed between the article and the counter electrode in the electrodeposition bath. A charge on the article causes deposition of the resins and other components in the bath so as to produce the electrodeposited film. The deposited film is then baked or otherwise hardened to yield a coating of a substantially uniform thickness having protective characteristics.

Pigment and pigment grind resins constitute important components of the coating bath and are deposited as part of the coating. Therefore, design characteristics are important for the grind resin as well as the other components of the coating. Such patents as U.S. Patent Nos. 3,936,405 and 4,035,275, as well as others describing beneficial characteristics for such grind resins.

Pigment grind resins are included in the coating in order to increase the dispersion stability of the inorganic and/or organic pigments which may be present in the coating bath.

Most commercial cathodic electrocoat systems presently used employ a quarternary ammonium functional pigment dispersion/stabilization polymer. For example, U.S. Patent No. 3,936,405 (Sturni et al.) describes the use of quaternary onium salt group-containing epoxy resins which are prepared by reacting amine salts, phosphine-acid mixtures or sulfide-acid mixtures with a 1,2-epoxy group containing material wherein a ratio of at least 0.4 equivalents of quaternary onium groups are said to be produced for equivalent of epoxy group initially present.

Although quaternary ammonium polymers have been found to be very effective, their preparation can be difficult and inconsistent.

It is therefore an object of the present invention to provide a pigment grind resin which naximizes the dispersing efficiency and dispersion stability of inorganic and organic pigments in an aqueous system.

It is another object of the present invention to provide a pigment grind resin which maximizes dispersing efficiency and dispersion stability which is not a quaternary ammonium polymer.

It is another object of the present invention to provide a pigment grind resin which is compatible with a wide range of electrodepositable resin systems. It is yet another object of the present invention to provide a pigment grind resin which is pH dependent and whose pH can be adapted to the pH of the principle amine resin.

These and other objects are achieved by the present invention which is directed to a pigment dispersion resin comprising the reaction product of
(A) the reaction product of
   (i) one or more aromatic diglycidyl ethers having the formula 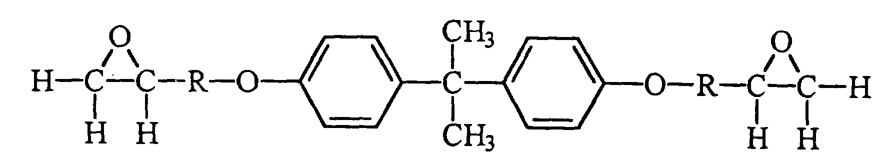 wherein R is alkandiyl having from 1 to 8 carbon atoms, and
   (ii) one or more bis-aryl alcohols or aromatic diols;
(B) one or more primary amines; and
(C) one or more monoepoxides having the formula 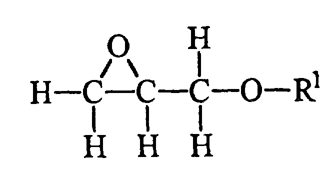
wherein R¹ is alkyl having from 4 to 24 carbon atoms or aryl substituted with a straight or branched chain of from 4 to 24 carbon atoms.
In preferred embodiments, the ratio of aromatic diglycidyl ether to bis-aryl alcohol or aromatic diol is from 8:1 to 1.2:1, and most preferably from 3.0:1 to 2.5:1. The ratio of said primary amine to said monoepoxide is preferably from 1 to 10 equivalents primary amine to 1 equivalent of monoepoxide and the ratio of said primary amine to said reaction product of said aromatic diglycidyl ether and said bis-aryl alcohol or aromatic diol is from 0,6:1 to 1,2:1. For the purposes of the present invention, equivalents are defined as the number of primary amine or epoxide functionalities present on the reactant.

The molecular weight of the reaction product of the aromatic diglycidyl ether and the bis-aryl alcohol is preferably from 300 to 3000, and most preferably from 340 to 360. It is also preferred that the total molecular weight of the pigment grind resin of the present invention be from 1500 to 6000, and most preferably from 2000 to 3000.

The primary amine is selected from the group consisting of one or more of a diamine, an amino alcohol, an aminopolyalkoxy alcohol, and a fatty amine and may be an amino alcohol, an aminopolyalkoxy alcohol such as polyglycolamine, a mixture of an amino alcohol and a diamine, a fatty amine, a mixture of a fatty amine and one or more of an amino alcohol, an aminopolyalkoxy alcohol, and a diamine. In a most preferred embodiment of the present invention, the aromatic diglycidyl ether comprises the diglycidyl ether of bisphenol A, the bis-aryl alcohol or aromatic diol comprises one or more of bisphenol A, hydroquinone and resorcinol, and the monoepoxide preferably comprises nonylphenolglycidyl ether. In one embodiment of the present invention, the primary amine comprises a mixture of one or more diamines, preferably dimethylaminopropylamine, and one or more aminoalcohohols or aminopolyalkoxy alcohols, preferably 9-amino-3,6-dioxanonan-1-ol in a ratio of 1:0.4 to 1:5, and most preferably 1:0.67 to 1:1.5. In another embodiment of the present invention, the primary amine comprises a fatty amine. In addition to the fatty amine, the other aforementioned primary amines and the monoepoxide may be included if desired.

The present invention also relates to pigment pastes comprising the pigment grind resin of the present invention and one or more pigments in a ratio of from 1:2 to 1:6.

The present invention also relates to aqueous electrodeposition compositions formed from the combination of a pigment paste comprising the grind resin of the present invention and one or more pigmenting agents, a principal emulsion of a principal resin and crosslinking agent, and water, preferably having a solids content from 5 percent to 35 percent by weight.

These grind resins are very effective pigment grind resins for cathodic electrocoat systems and produce films having an excellent appearance. The coatings exhibit excellent corrosion resistance.

The aromatic diglycidyl ethers which may be used in the present invention have the formula 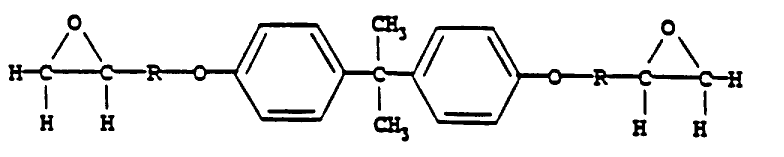 wherein R is an alkyeline having from 1 to 8 carbon atoms . Preferably, the aromatic diglycidyl ether comprises the diglycidyl ether of *p,p'*-dihydroxydiphenylpropane (commonly referred to as bisphenol A).

The syntheses of the diglycidyl ether compounds follow procedures known in the art. In such fashion, epihalohydrins such as epichlorohydrin, epibromohydrin or epiiodohydrin are reacted with diol precursors to form the bis-glycidyl ether. Reaction conditions include use of an aprotic, polar solvent and an acid scavenger such as aqueous sodium hydroxide or other similar hydroxide base under about stoichiometric proportions and a temperature of from 0°C to 100°C, preferably ambient temperature.

The bis-aryl alcohols or aromatic diols used in the present invention preferably have the formula HO-Ar-OH, wherein Ar is selected from the group consisting of phenylene; phenylene substituted with halogen, alkoxy of 1 to 6 carbon atoms, or alkyl of 1 to 6 carbon atoms; naphthalene; polyphenylene having two or three phenylenes linked by carbon-carbon bonds or alkylene groups having 1 to 6 carbon atoms; and naphthalene or a polyphenylene as defined above substituted with halogen, or alkyl of 1 to 6 carbon atoms, or alkoxy of 1 to 6 carbon atoms. Preferably, the bis-aryl alcohol or aromatic diol comprises one or more of bisphenol A, hydroquinone and resorcinol.

The aromatic diglycidyl ethers and bis-aryl alcohol or aromatic diol are combined according to the invention in any of several combinations to produce the backbone structure of the resins of this invention. The addition reaction oligomers formed from the combination of aromatic diglycidyl ether and bis-aryl alcohol or aromatic diol monomers contain alternating units of aromatic diglycidyl ethers and bis-aryl alcohols or aromatic diols. It is believed that during the reaction, the hydroxy groups of the bis-aryl alcohols or aromatic diols react with the epoxide groups of the aromatic diglycidyl ether monomeric unit so as to open the epoxide ring and form a secondary alcohol group within the aromatic diglycidyl ether monomeric unit and an ether linkage between the bis-aryl alcohol or aromatic diol and aromatic diglycidyl ether monomeric units.

The distribution of aromatic diglycidyl ether monomers and bis-aryl alcohol or aromatic diol monomers, when more than one of each is present, may be random or ordered. In producing a random distribution, the bis-aryl alcohol or aromatic diol and aromatic diglycidyl ether monomers are combined as a gross mixture at the beginning of the reaction. In producing an ordered distribution of aromatic diglycidyl ether and bis-aryl alcohol or aromatic diol monomer addition will be sequential so that a block of the first aromatic diglycidyl ether and a particular bis-aryl alcohol or aromatic diol will first be produced and then a second aromatic diglycidyl ether and bis aryl alcohol will be added to form second blocks grafted to the first blocks.

It is preferred to use an excess of bis-aryl alcohol or aromatic diol to aromatic diglycidyl ether so that the reaction product will be terminated with epoxide groups. Preferably, the ratio of aromatic diglycidyl ether to bis-aryl alcohol or aromatic diol is from 8:1 to 1.2:1, and most preferably from 2.5:1 to 3:1.

The oligomeric molecular weight of the backbone structure may be from 300 to 3000. The ratio of the sum of aromatic diglycidyl ether monomer equivalents to the sum of bis-aryl alcohol or aromatic diol monomer equivalents used for the addition reaction to form the oligomers will be calculated so as to yield a molecular weight within this range. The equivalents of aromatic diglycidyl ether or bis-aryl alcohol or aromatic diol is calculated by dividing the motecular weight of aromatic diglycidyl ether, bis-aryl alcohol, or aromatic diol by the number of hydroxyl or epoxide groups present in the respective molecule. The range of equivalents of bis-aryl alcohol or aromatic diol to aromatic diglycidyl ether ratios appropriate for generation of this molecular weight range will be from 1:1.2 to 1:8. The preferred molecular weights lie in the range of from 300 to 3000 and especially preferred are molecular weights of 680 to 720. The ratio of bis-aryl alcohol or aromatic diol to aromatic diglycidyl ether equivalents which produces these preferred molecular weights will be from 1.2:1 to 1:8.

Appropriate adjustment of the ratio of the reactants and reaction conditions will also affect the molecular weight and sequence of the aromatic diglycidyl ethers and bis-aryl alcohols present in the oligomers. Those skilled in the art will understand the variations and the effects they have upon the oligomeric character.

Generally, the extent of addition will increase with both the time and temperature of the reaction so that the desired molecular weight will be achieved through use of periods of 2 to 4 hours and temperatures of 140°C to 170°C. However, the reaction usually is self-limiting so that further time or temperature adjustment will not increase the limiting molecular weight.

Lewis bases are generally used as catalysts to promote the addition of the bis-aryl alcohol or aromatic diol monomers to the aromatic diglycidyl ether monomers. It is preferred to use a triaromatic phosphine such as triphenyl phosphine as well as tetraalkyl phosphonium salts.

Generally, organic solvents typically are used as a reaction medium for the production of the addition reaction oligomer epoxide compound. Included are such exemplary solvents as aliphatic ketones, for example methyl ethyl ketone or methyl isobutyl ketone as well as aromatic solvents like toluene or xylene, polyethers and glycol ethers, and also alcohols.

A large number of different primary amine functional capping agents can be added to the backbone structure of the present invention. More particularly, it is believed that the primary amines react with the epoxy end groups or the backbone structure so as to open the epoxide ring and form a secondary alcohol group with the backbone structure and a secondary amine. These primary amines may serve a number of different functions, including surface wetting, providing basicity, solubility, and lipophilicity. Another characteristic which the primary amine may provide is allowing the grind resin to be soluble in the bath to which it is to be added.

Suitable primary amines for increasing the solubility of the backbone structure are amino alcohols such as diethanolamine or aminopolyalkoxy alcohols such as Polyglycol Amine H-163, an ethoxylated species having the chemical formula H₂N-(CH₂)₃-(O-CH₂CH₂)₂-OH and commercially available from Union Carbide Corporation, or 2,2'-aminoethoxyethanol, available from BASF, AG, Ludwigshafen, FRG. Other suitable primary amines for adjusting the solubility of the backbone structure are hydroxyalkyl alkyl amines, dihydroxyalkylamines. In addition, aromatic and aliphatic can also be employed which optionally possess functional groups containing oxygen, sulfur, halogen or nitroso. Examples are monoethanol-amine, 4-aminobenzoic acid, aminopropionic acid, *N*-(hydroxyethyl)ethylene diamine, anthranilic acid, and *p*-aminophenol. Other suitable primary amines have aliphatic chains of from 1 to 24 carbon atoms. The aliphatic chains may be ethoxylated at one end. The chain length of the oligoether portion is not more than 7 units of ethylene oxide.

Suitable primary amines for increasing the basicity of the backbone structure include diamines such as dimethylaminopropylamine. Examples of other diamines which are suitable include ethylene diamine, 1,2-propylenediamine, 1,3-propylenediamine, 1,2-butylenediamine, 1,3-butylenediamine, 1,4-butylenediamie, 1,5-pentylenediamine and 1,6-hexylenediamine. Aromatic diamines such as the phenylene diamines and the toluene diamines can also be employed. Examples of these amines are *p*-phenylenediamine and *p*-toluenediamine. *N*-alkyl and *N*-aryl derivatives of the above amines can be employed such as *N,N*-dimethyl-*o*-phenylenediamine, *N'N*'-di-*p*-tolyl-*m*-phenylenediamine, and *p*-aminodiphenylamine.

Typically, the amount of primary amine used is proportional to or in excess of the stoichiometric equivalents of the epoxide present. Preferably, the ratio of primary amine to backbone structure is from 0.6:1 to 1.2:1, and most preferably from 0.85:1 to 1:1.

The primary amine also functions to allow the grind resin of the present invention to be adapted for use with any number of electrocoating systems. Thus, for example, the inclusion of a greater proportion of a basic amine such as dimethylaminopropyl-amine will provide a grind resin product with greater solubility in higher pH baths, and therefore greater compatibility with more basic primary emulsions (i.e., pH=6-8.5). Likewise, the inclusion of a greater proportion of an amino alcohol such as 9-amino-3,6-dioxanonan-1-ol will render the grind resin produced more soluble in acidic baths, and therefore more compatible with more acidic primary emulsions (i.e., pH=2-6).

Next, a monoepoxide is reacted with the now-secondary amine functional polymer. More particularly, it is believed that the secondary amine reacts with the epoxy end of the monoepoxide so as to open the epoxide ring, thereby converting the secondary amine to a tertiary amine and forming another secondary alcohol.

The monoepoxides which are useful in the present invention have the formula 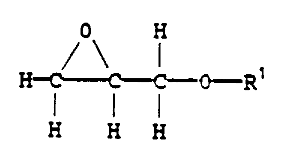 wherein R¹ is alkyl having from 4 to 24 carbon atoms or aryl substituted with a straight or branched chain of from 4 to 24 carbon atoms. The amount and type of monoepoxide used may be varied depending upon the final properties reguired. For instance, preferred monoepoxides include 2-ethylhexylglycidyl ether and alkylaryl epoxides such as nonylphenolglycidyl ether.

The monoepoxide serves to provide the grind resin of the present invention with a lipophilic tail. This is important because it enhances pigment wetting characteristics and also provides steric stabilization. In addition, the monoepoxide acts as a primary amine scavenger, reacting with remaining primary amine. These free primary amines are undesirable in an electrocoat system because they adversely affect bath conductivity, bath stability, plating characteristics, and corrosion performance.

The ratio of primary amine to monoepoxy moeties has an effect upon the total molecular weight of the grind resin which is produced, as well as upon the basicity and grinding characteristics of the grind resin produced. Typically, the amount of monoepoxide used is roughly equal to or less than the stoichiometric equivalents of the secondary amine present. When a monoepoxide is used, the ratio of the primary amine to monoepoxide is from 1 to 10 equivalents, preferably from 1.4 to 2.4 equivalents, of primary amine per equivalent of monoepoxide. Most preferably, the ratio of primary amine to monoepoxide is 1.7 equivalents primary amine per equivalent of monoepoxide.

In another embodiment of the present invention, the primary amine can provide all or part of the lipophilicity of the backbone structure. In this embodiment, the primary amine comprises fatty amines. Preferably, the primary amine comprises aliphatic fatty amines and their ethoxylated derivates, and have from 7 to 24 carbon atoms. Examples of suitable fatty amines include Adogen cocoa amines. One preferred fatty amine is Adogen 160, which is commercially available from Sherex Chemical Co., Inc., P. O. Box 646, Dublin, OH.

The use of an effective amount of fatty amines in the present invention provides the backbone structure with sufficient lipophilicity such that only a small amount or no monoepoxide need be included. The fatty amine need not entirely replace the use of amino alcohols, diamines, and monoepoxides, and these ingredients may also be included in this embodiment of the invention to the extent desired.

In preparing the pigment grind resins of the present invention, the aromatic diglycidyl ether and the bis-aryl alcohol or aromatic diol are reacted at a temperature of 100°C to 180°C for a time sufficient to react all of the bis-aryl alcohol with the aromatic diglycidyl ether, generally about one hour to about two hours. The primary amine is reacted with the backbone structure thus formed at a temperature of 50°C to 120°C for a time sufficient to complete the epoxide-amine reaction, about one to about two hours. Finally, the monoepoxide is reacted with the secondary amine functional polymer thus formed at a temperature of 70°C to 100°C for a time sufficient to react all of the monoepoxide with the secondary amines found in the backbone structure, and any unreacted primary amines left in the solution, generally about one to about two hours.

A grind resin is then easily produced by neutralizing the polymer formed from 50 to 100 percent with a suitable acid such as acetic acid. Other suitable acids include water soluble organic or inorganic acids such as formic acid, lactic acid, phosphoric acid, sulfuric acid and hydrochloric acid . The extent of neutralization depends upon the particular resin and it is only necessary that sufficient acid be added to solubilize or disperse the resin.

The pigment grind resin of the present invention may be combined with one or more pigments to form a pigment paste. Suitable pigments with which the grind resin of the present invention can be used include carbon black, titanium dioxide, strontium dioxide, lead oxide, strontium chromate, talc, barium sulphite, barium yellow, cadmium red, chromic green, lead silicate, iron oxides, various clays (including ASP 200, a kaolin clay commercially available from Englehard Corporation, Menlo Park C28, Edison, NJ 08818), lead and zinc sulfate, various dyes such as Orasil RL, available from Ciba-Geigy Corporation, and/or other pigments necessary for the production of color. This list is not meant to be exclusive.

The ratio of the pigment to grind resin may be from 2:1 to 6:1. Preferably, ratio of pigment to grind resin is from 2.5:1 to 3.5:1. The pigment pastes generally have about 55 percent nonvolatiles, and a 3:1 ratio of P:B (pigment to binder resin). Nonvolatiles are defined herein as materials which are not volatilized under the conditions of ASTM D2369-86.

Aqueous electrodeposition compositions are formed from the combination of the pigment grind resin formulations of the present invention, principal emulsions, and water to provide a solid content of from 5% to 35% by weight. The ratio of weights of the pigment grind resin formulations to the principal resin emulsions are from 1:2 to 1:10. The pH of the electrodeposition compositions may be from 2 to 8.5 and the ratio by weight of the amine resins to crosslinking agents in the electrodeposition compositions may be from 0.67:1 to 5:1.

The pigment pastes of the present invention may be mixed with a wide range of principal emulsions to form electrodeposition baths. These principal emulsions generally have a nonvolatile content of about 35 percent. Generally, the baths in which the grind resins of the present invention are used include 22 percent nonvolatiles and a P:B ratio of about 1:3. A preferred generic formula for a suitable bath which includes the grind resin of the present invention will include from 20 weight percent to 60 weight percent emulsion, from 5 weight percent to 25 weight percent pigment paste, and from 20 weight percent to 60 weight percent water; for example, 42% emulsion, 13% pigment paste, and 45% water.

A preferred coating composition is composed of a principal resin, a cross-linker, a plasticizing agent, an optional anti-cratering agent, pigments, and the grind resin of the present invention. The principal resin is a polyamine self-condensed epoxy adduct having pendant alkylphenoxy groups. The cross-linker is a blocked isocyanate or polyisocyanate compound such as toluene diisocyanate compounds, blocked isocyanurates of hexane diisocyanate, or mixtures thereof. The plasticizer may be any surfactant compound which functions to reduce viscosity and enable film flow and leveling. Preferred surfactants are poly(alkylene oxide) alcohol compounds. The optional anti-cratering agent is a polyacrylate resin having pendant alkyl, aromatic and dialkylamino groups. The pigments are selected from inorganic, organometallic and organic compounds contributing either color, bulk, filler or catalytic properties to the composition.

When combined with this principal emulsion, the grind resin of the present invention preferably includes a primary amine component comprising a mixture of 9-amino-3,6-dioxanonan-1-ol and dimethylaminopropylamine in a ratio of about 1.24:1.

Another example of a principal emulsion which the pigment paste of the invention may be adapted for use with comprises 812.8 parts of the principal resin comprising 1881.7 parts of triethylene tetramine, 1941.8 parts of an epoxide resin, 700 parts ethylene glycol monoethyl ether and 458.3 parts of the glycidyl ether of mixed fatty alcohols containing predominantly n-octyl and n-decyl groups, 452.7 parts of a crosslinker comprising TNP/TDI/ethylene glycol monopropyl ether, 14.2 parts of 90% acetic acid and 1220.3 parts water. This principal resin is disclosed in Example II, first paragraph of U.S. Patent No. 4,134,864. The principal emulsion can be made by mixing all of the components except water and then slowly adding the water with agitation.

Other examples of principal emulsions which can be combined with the pigment paste of the present invention include those prepared with principal resins such as polyamine-terminated epoxy resins, amine-terminated resins, chain extended versions thereof wherein the chain extenders are polyols, polyester polyols, polyether polyols, polyamines, polyester polyamines, and polyether amines. These emulsions will also contain crosslinkers such as blocked isocyanates blocked polyisocyanurates, transesterification compounds, transamidation compounds, aminoplasts and mixtures thereof. Preferred resins include those disclosed in Example 9 of U.S. Patent No. 4,134,864 ; the emulsion in Example D from U.S. Patent No. 4,596,744; the emulsion in Example D in which "A" is replaced by the TMP/TDI/ethylene glycol monopropyl ether crosslinker previously defined; the emulsion in Example 1 in U.S. Patent No. 4,713,406; the emulsion in Example 2 in the U.S. Patent No. 4,721,758; and the emulsion in Example 2 in U.S. Patent No. 4,724,254.

Generally, the principal resin emulsions and pigment grind resin formulations are combined to form the electrodepositon compositions shortly before use in the electrodeposition baths. The electrodeposition compositions may be further diluted with water and other components such as coalescing agents, anti-cratering agents, film build agents, surfactants, anti-pitting agents and the like to produce the baths. Sufficient quantities of the principal resin emulsions and pigment grind resin formulations are used so that the coating produced on a substrate in the baths will have sufficient thickness so that baking will provide such desired characteristics as a smooth surface, high build and effectiveness in a low temperature cure. In addition, the bath proportions of compositions should enable short coating time at a low temperature.

The electrodeposition process typically takes place in an electrically insulated tank containing an electrically conducting anode which is attached to a direct current source. The size of the tank will depend on the size of article to be coated. Typically, the tank will be constructed of stainless steel or mild steel lined with a dielectric coating such as epoxy impregnated fiberglass or polypropylene. The typical size of an electrodeposition dip tank used for such articles as automobile or truck bodies will be designed to contain from about 50,000 to about 500,000 liters of electrodeposition bath.

Adjustment of deposition parameters such as voltage, the time, the bath temperature, the percent solids content, the acidity and the like of the aqueous electrodeposition bath in the dip tank will promote appropriate deposit of the desired film. To this end, a period of immersion of about 1 minute to about 4 minutes and a DC voltage for the electric current of about 100 volts to about 500 volts and a percent solids in the bath of about 18% to about 30% are used with 350 volts voltage, 88°F (31°C) temperature, 2 minute period of immersion and 22% solids being preferred.

After the films have been produced by the electrodeposition process, the film-coated substrate bodies are removed from the dip tank and the excess bath solids are rinsed off. The film-coated substrate bodies are then placed into an oven where they are cured or hardened. In general, the film- coated substrate bodies are heated to a temperature from about 149°C to 204°C, preferably 163°C to about 177°C for a period of approximately 20 to about 25 minutes to effect the hardening or crosslinking reaction.

### Detailed Description of the Preferred Embodiments

The following examples are illustrative of the present invention . Parts and percentages used are parts and percentages by weight, unless otherwise indicated.

### Example 1

This general procedure was used to prepare a grind resin according to the present invention. First, 27.81 parts of the diglycidyl ether of bisphenol A and 1.44 parts of xylene were charged into a reaction vessel. The charge was heated to 82°C under a dry nitrogen atmosphere. Next, the heating of the reaction vessel was discontinued and a charge of 5.81 parts bisphenol A was added. The heating of the reaction vessel was then continued to a temperature of 127°C. At this time, the reaction exothermed on its own, with a peak of about 149°C - 160°C. The mixture was held above 149°C until a EEW (epoxide equivalent weight) of 350 ±10 was achieved.

Once the EEW of 350 was achieved, 21.08 parts ethylene glycol monobutyl ether was added to the reaction vessel and the bath was then cooled to 90°C.

After a temperature of 90°C was achieved, a mixture of 7.77 parts of polyglycolanine and 4.07 parts dimethylaminopropylamine were added to the reaction vessel over a period of 6 minutes. The batch exothermed to 104°C-110°C, and the exotherm was held at or below 115°C for one hour. Next, a pump flush of 0.53 parts ethylene glycol monobutyl ether was added and thereafter 4.92 parts ethylene glycol monobutyl ether was charged into the reaction vessel and the batch was cooled to 77°C. Next, 14.9 parts nonylphenolglycidyl ether was charged into the reaction vessel. The batch exothermed to 88°C-93°C, and the batch was held at this temperature for one hour.

Next, a pump of 1.53 parts ethylene glycol monobutyl ether was added and then 10.03 parts ethylene glycol monobutyl ether was charged into the reaction vessel and the batch was cooled to 66°C. The resultant product was then drummed off through 25 micron filter bags.

The nonvolatile content of the grind resin prepared in Example 1 was determined to be 60.0%, the weight per gallen (liter), was 8.53 (2,25) and the viscosity was about 4900 mPas at 25°C.

### EXAMPLES 2-11

Examples 2-11 were prepared to determine the effect of a change in the amine add time and a change in the solids of the resin during the amine add step upon the grind resin. Thus, Examples 2-11 were prepared in accordance with the procedure set forth for Example 1, with the exception that the amine add time and solids content were varied. Table 2 sets forth the resin variables for Examples 2-11.

**Table 2**

| Resin Variables Used | | |
|---|---|---|
| Example | Amine Add Time | Percent Solids |
| | (Hours) | |
| 2 | 2 | 50 |
| 3 | 6 | 50 |
| 4 | 10 | 50 |
| 5 | 2 | 60 |
| 6 | 6 | 60 |
| 7 | 10 | 60 |
| 8 | 2 | 70 |
| 9 | 4 | 70 |
| 10 | 6 | 70 |
| 11 | 10 | 70 |

Neutralization ladders with acetic acid were run on the resins prepared in Examples 2-11. All of the resins had a hazy appearance at 50% neutralization and were clear at 75% neutralization. The pH and appearances of Examples 2-11 at various stages of the neutralization process are provided in Table 3.

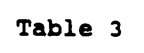

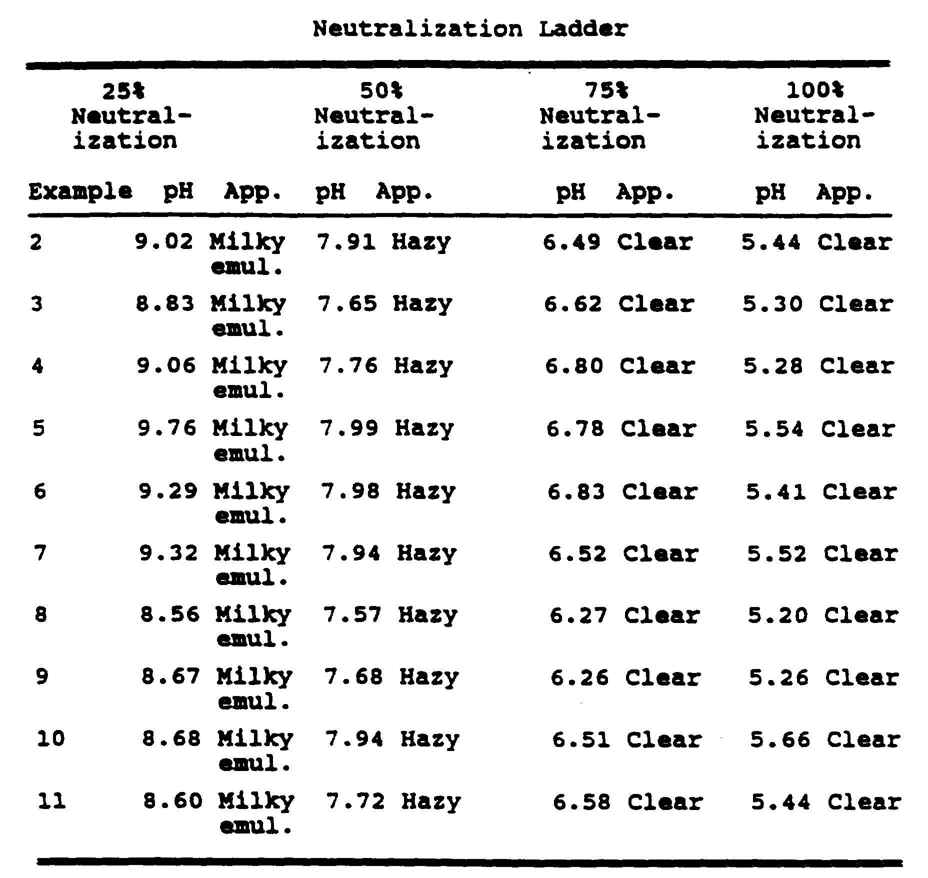

### Example 12

The resins of Examples 2-11 were used to prepare gray pigment pastes. Pastes were formulated according to Table 4 below, using as standard parameters 56% nonvolatile content and a P:B ratio of 3:1.

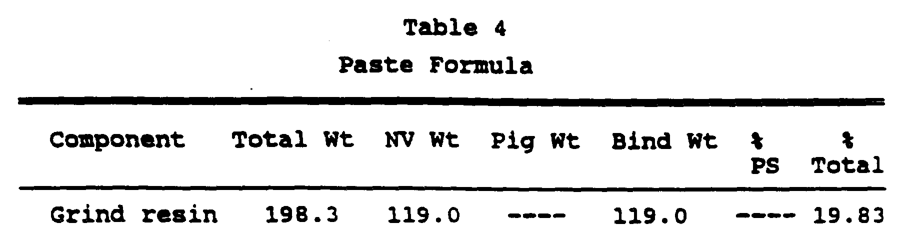

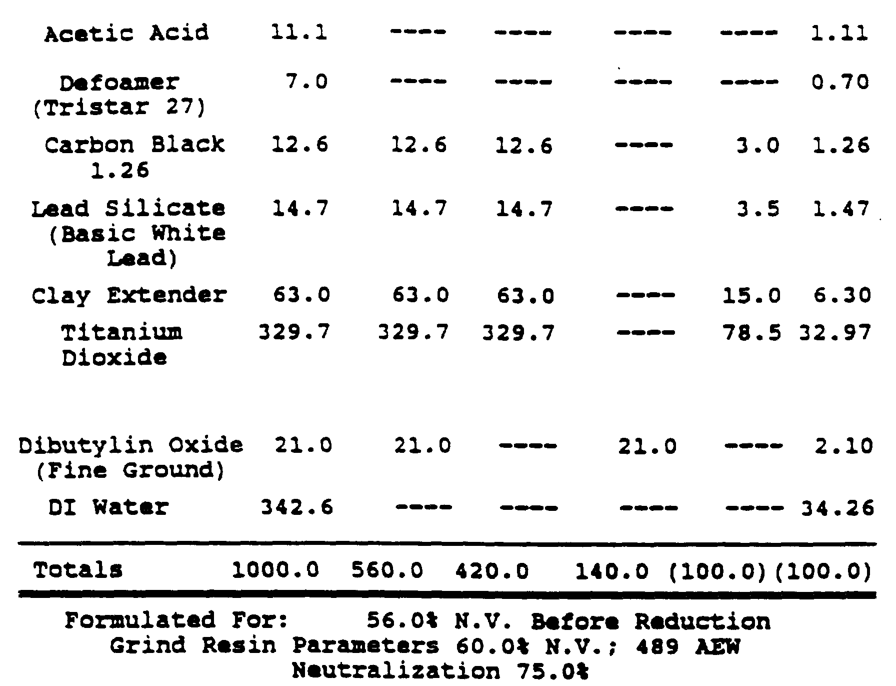

The initial and grinding viscosities of Examples 2-11 were similar as can be seen from the results set forth in Table 5. The grinding temperature was maintained in the range of 32°C-46°C. The grinding parameters of the pastes formed from Examples 2-11 are provided in Table 6. All of the pastes ground to 8-10µ in three passes through a vertical sand mill.

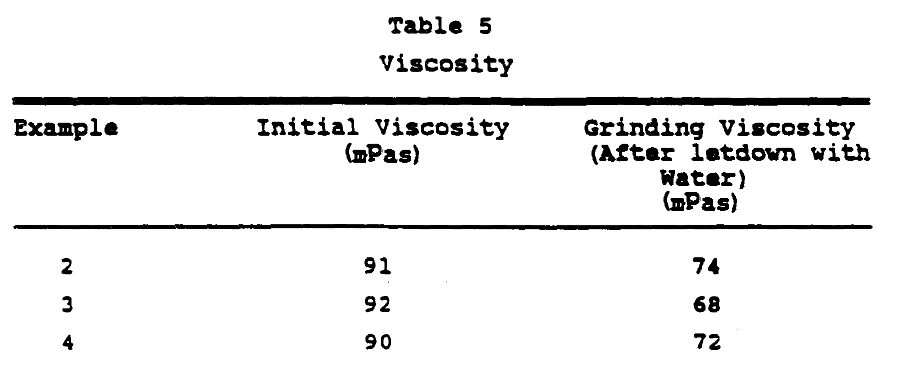

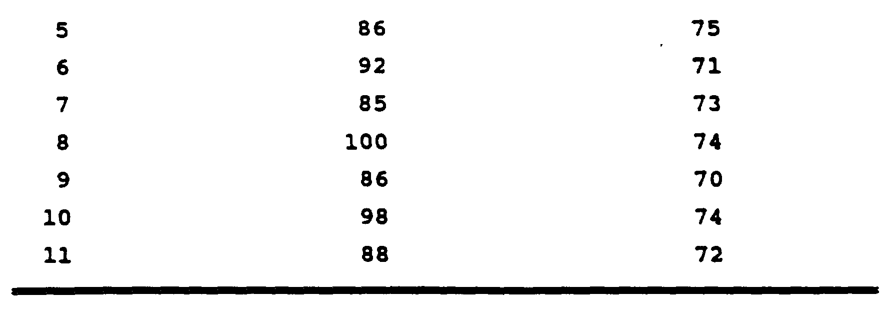

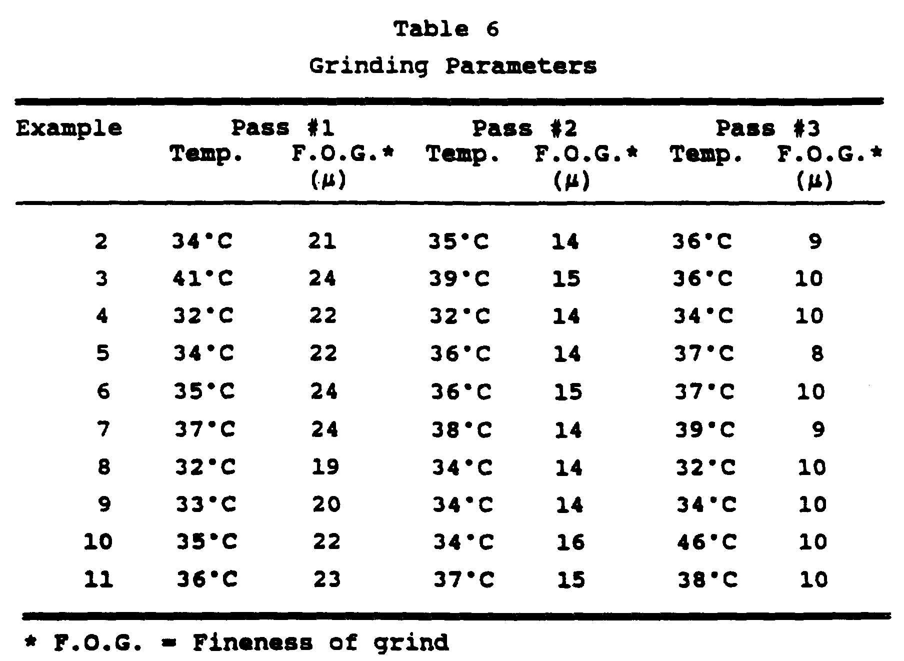

### Example 13

Samples of the pastes prepared in Example 12 were subjected to ageing in an oven for sixteen hours. The results, which were very good for all pastes, are provided in Table 7. No water separation or settling was observed and no significant increase in the fineness of grind was observed. In sum, all of the resins of Examples 2-11 made good pastes without exhibiting any abnormalities with regard to grinding or processing of the paste.

**Table 7**

| 16 Hour Heat Ageing Test | | | | |
|---|---|---|---|---|
| Example | Final % Nonvolatiles | Finess of Grind (µ) | Separation | Settling |
| 2 | 54.3 | 9 | No | No |
| 3 | 53.9 | 10 | No | No |
| 4 | 54.7 | 10 | No | No |
| 5 | 53.7 | 9 | No | No |
| 6 | 53.9 | 10 | No | No |
| 7 | 54.3 | 12 | No | No |
| 8 | 54.6 | 14 | No | No |
| 9 | 54.0 | 12 | 1 drop | No |
| 10 | 54.9 | 11 | 2 drops | No |
| 11 | 54.0 | 10 | No | No |

### Example 14

Baths were prepared using the pastes prepared in Example 12. The baths were prepared as follows: approximately 1900 parts of the principal emulsion, prepared as described below (32% N.V., 600 N.V. parts), about 525 parts of pigment paste, about 23 parts of an acrylic flow solution, prepared as described below in Table 8, about 1600 parts of water, about 20 parts Dowanol PPH (Dow Chemical Co., Midland, MI) and about 1 part 25% acetic acid were combined at ambient temperature and mixed for about one hour. The bath solids were adjusted with aqueous acid, if necessary, to yield a solids content of about 21-24%.

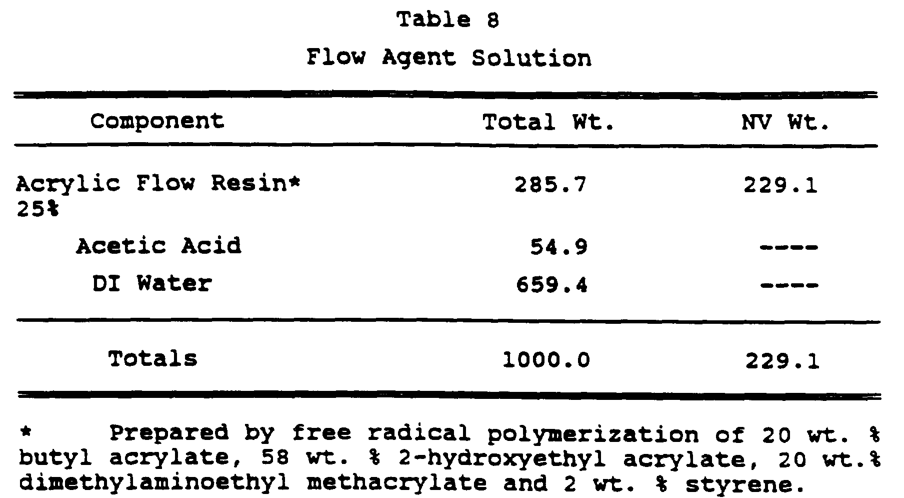

### Preparation of Princical Resin

Xylene is added to a clean dry reactor. The mixing liquid is blanketed with pure N₂ and heated to 42°C.

Solid epoxy (characteristics and weights in Table 9) is added at such a rate that the batch temperature never drops below 60°C, usually over a period of two hours. Heating is continued until 100°C.

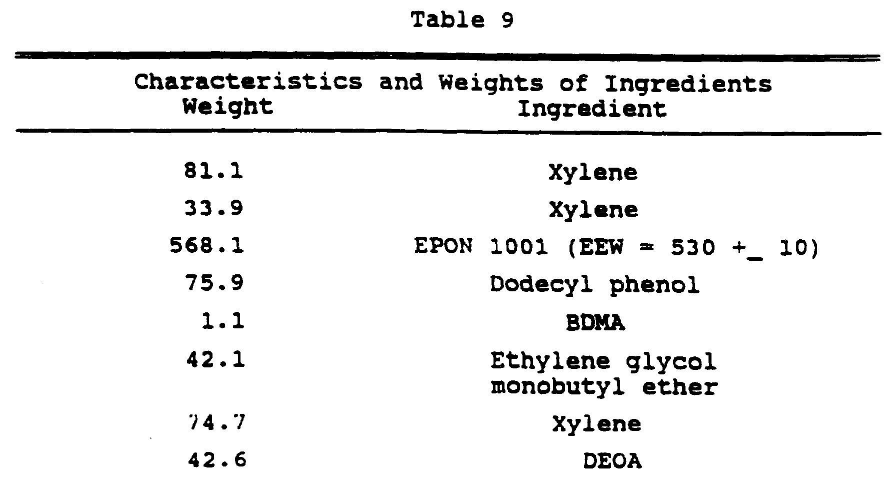

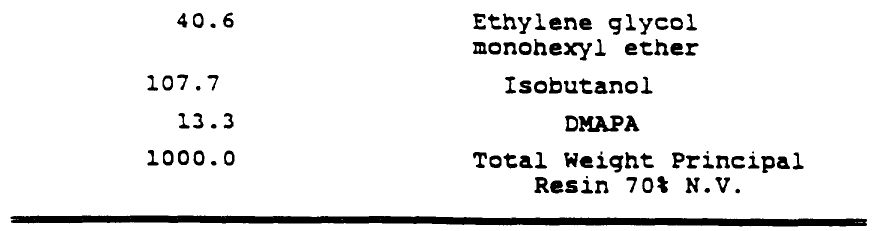

At this point, the dodecyl phenol is added and then heated to 118°C. Vacuum drying by distillation of xylene is started at this temperature and continued heating to 125°C. The pressure should be between 66 cm and 69 cm of Hg (88 kP-92 kP). The drying stage should take about one hour. Break vacuum with pure nitrogen only. The batch is cooled to 115°C. The sample at this point should be % nonvolatiles (%N.V.) = 95.0 ± 0.5.

At 115°C benzyldimethylamine (BDMA) is added. The peak exotherm temperature should reach 129-132°C. The temperature is maintained at 130°C ± 2°C and the polymerization is followed by EEW (epoxide equivalent weight) titration. Every 30 minutes the reaction is sampled and is stopped at an end point of 1100 ±10 EEW. The typical reaction time is 3 hours. Adjustments to the catalyst level may be necessary if extension period is ± 30 minutes from 3 hours.

At the target EEW, the reducing solvents are added followed by diethanol amine (DEOA).

The temperature of this reaction should not exceed 132°C. Cooling may be necessary at this point with jacket or coils. A vacuum suction is started immediately after the DEOA addition and pressure is reduced to 45,72 cm (18 inches) of Hg and held for 5 minutes. The pressure is further reduced in 5,08 cm (2 inch) Hg increments followed by short holding period until 66,04-68,5 cm (26-27 inches) of Hg is achieved. The batch is then cooled to 90°C in one hour following addition of DEOA. To achieve this a good reflux rate should be attained in 20-25 minutes after the DEOA addition. All solvents are returned to the reactor.

After one hour of vacuum cooling, (T = 90°C), ethylene glycol monohexyl ether and isobutanol are added without breaking vacuum. The batch is cooled for 35 minutes to about 60°C under full vacuum.

The dimethylamino propyl amine (DMAPA) is charged as fast as possible after the 35 minute cooling period. The batch temperature is kept below 63°C. The batch is held is kept between 54°C and 60°C for two hours after exotherm. Then it is heated 90°C over one hour and this temperature is held for one hour. The batch is cooled to 80°C.

### Preparation of Crosslinking Agent I

A blocked isocyanate cross-linking agent (polyurethane cross-linking agent) is prepared according to the following procedure. Slowly and with stirring in a nitrogen atmosphere 291 parts of an 80/20 isomeric mixture of 2,4-/2,6-toluene diisocyanate, 0.08 parts of dibutyltin dilaurate and 180 parts of methyl iso-butyl ketone are added, the temperature being maintained below 38°C. The mixture is maintained at 38°C for a further half hour after which 75 parts of trimethylolpropane are added. After allowing the reaction to proceed for about 10 hours, 175 parts of ethylene glycol monopropyl ether is added and the mixture reaction kept 1.5 hours at 121°C until essentially all the isocyanate groups are reacted. This depletion is recognized from the infrared spectrum.

Another blocked isocyanate can be prepared by altering the foregoing order of addition pursuant to Example 1 of German Offenlegungsschrift 2,701,002.

### Preparation of Cross-linking Agent II

A blocked isocyanate crosslinker (polyurea) is prepared according to the following procedure. Four-hundred-eighty-three parts of triisocyanurated hexamethylendiisocyanate and 193 parts of 2-hexanone are charged to a dry reactor. Dibutylamine (307 parts) are added slowly and with stirring under nitrogen atmosphere so that the temperature does not exceed 80°C. After all amine has reacted 14 parts of n-butanol and 0.2 parts of dibutyltin dilaurate are added. The reaction mixture is heated to 80°C until no isocyanate groups can be detected by infrared analysis.

### Preparation of Emulsion

With the foregoing principal resin stirring at 80°C the acetic acid and plasticizer, Paraplex WP-I (sold by Rohm & Haas) are added, followed by addition of crosslinker I prepared as described above. The resin mixture at this point should be at about 56°C. It is mixed for 15 minutes.

Then, the resin premix and acid as formulated above are added with agitation to the H₂O and Surfynol 104 (50% in ethylene glycol monobutyl ether) starting at 25°C. Good mixing is important here, (N.V. = 55%). The temperature at this point should be 37°C to 40°C. The mix is stirred for the next portion of H₂O. It is held and mixed 30 minutes. The temperature should be between 30°C and 32°C. The remaining water is added. Final emulsion temperature should be 27°C-30°C.

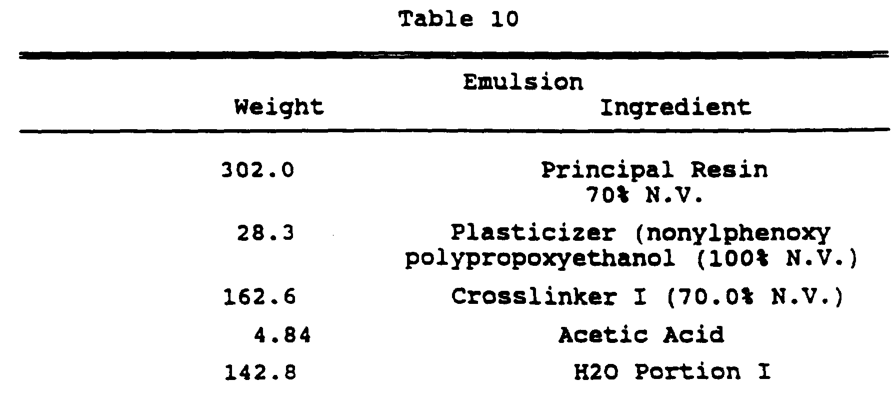

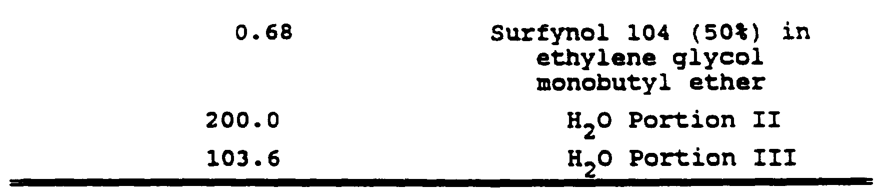

The bath was placed in a pilot electrodeposition tank and allowed to age for three days with circulation. The pH and conductivity of all the baths prepared from Examples 2-11 was tested. Voltage ladders were run and GM scab corrosion sets and Chrysler chipping corrosion sets were coated. Throwpower and appearance panels were coated and the results are in Table 11 together with the results of a pump stability test.

**Table 11**

| Bath Parameters | | | |
|---|---|---|---|
| Example | Throwpower | Pump Stability | Appearance |
| | (cm) | (Grams) | |
| 2 | 33 | >100.00 | OK |
| 3 | 29.2 | 1.91 | Rough |
| 4 | 33 | 2.69 | OK , Few |
| | | | craters |
| 5 | 29.8 | 0.65 | OK |
| 6 | 27.9 | 1.13 | Best |
| | | | appearance |
| 7 | 27.9 | 2.86 | OK |
| 8 | 29.2 | 4.03 | OK |
| 9 | 28.6 | 2.64 | Rough |
| 10 | 27.3 | 2.26 | Rough, low film build |
| 11 | 27.3 | 2.34 | OK |

The bath which employed the grind resin of Example 6 (which had a 6 minute amine add time and 60% solids value) yielded the best appearing panels. GM twenty-cycle scab corrosion data is given in Table 12.

**Table 12**

| GM Twenty-Cycle Scab Corrosion Test Results | | | |
|---|---|---|---|
| Example | Scribe Creep in Millimeters | | |
| Phosphated Steel | | Phosphated, Hot-dip Galvanized Steel | Bare Galvanized Steel |
| 2 | 2.84 | 1.42 | 3.34 |
| 3 | 2.99 | 1.38 | 2.56 |
| 4 | 2.74 | 1.27 | 2.66 |
| 5 | 3.59 | 1.61 | 3.37 |
| 6 | 2.95 | 1.54 | 3.17 |
| 7 | 2.58 | 1.25 | 4.02 |
| 8 | 2.35 | 1.34 | 4.38 |
| 9 | 2.32 | 1.53 | 3.73 |
| 10 | 3.26 | 1.31 | 4.07 |
| 11 | 2.78 | 1.25 | 2.68 |

## Claims

1. A pigment dispersion resin comprising the reaction product of:
(A) the reaction product of
(i) an aromatic diglycidyl ether having the formula 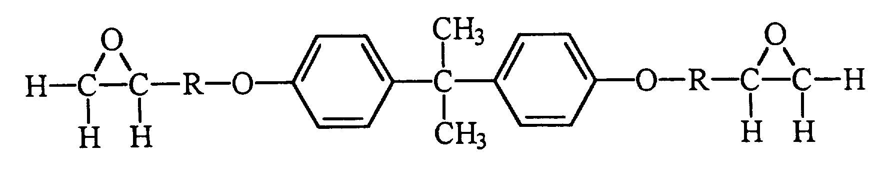 wherein R is alkandiyl having from 1 to 8 carbon atoms, and
(ii) a bis-aryl alcohol or aromatic diol;
(B) a primary amine; and
(C) a monoepoxide having the formula 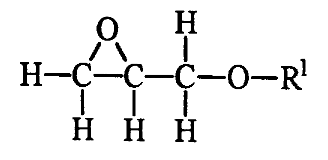
wherein R¹ is alkyl having from 4 to 24 carbon atoms or aryl substituted with a straight or branched chain of from 4 to 24 carbon atoms.

2. The pigment dispersion resin of Claim 1, wherein said primary amine is selected from the group consisting of one or more of a diamine, an amino alcohol, an aminopolyalkoxy alcohol, and a fatty amine.

3. The pigment dispersion resin of Claim 2, wherein the ratio of said primary amine to said monoepoxide is from 1 to 10 equivalents primary amine to 1 equivalent of monoepoxide.

4. The pigment dispersion resin of Claim 3, wherein the ratio of said primary amine to said monoepoxide is 1.7 equivalents primary amine to 1 equivalent monoepoxide.

5. The pigment dispersion resin of Claim 1, wherein the ratio of said primary amine to said reaction product of said aromatic diglycidyl ether and said bis-aryl alcohol or aromatic diol is from 0.6:1 to 1.2:1.

6. The pigment dispersion resin of Claim 5, wherein said primary amine comprises a mixture of one or more diamines and one or more amino alcohol or amino polyalkoxy alcohols in a ratio from 1:0.4 to 1:5.

7. The pigment dispersion resin of Claim 6, wherein the ratio of said amino alcohol or said aminopolyalkoxy alcohol to said diamine is from 1:0.67 to 1:1.5.

8. The pigment dispersion resin of Claim 2, wherein the ratio of said aromatic diglycidyl ether to said bis-aryl alcohol or aromatic diol is from 8:1 to 1.2:1.

9. The pigment dispersion resin of Claim 1 wherein said bis-aryl alcohol or aromat diol has the formula HO-Ar-OH, wherein Ar is selected from the group consisting of phenylene, phenylene substituted with halogen, alkyl of 1 to 6 carbon atoms, or alkoxy of 1 to 6 carbon atoms, naphthalene, polyphenylene having two or three phenylenes linked by carbon-carbon bonds or alkylene groups of 1 to 5 carbon atoms, and naphthalene or polyphenylene substituted with halogen, alkyl from 1 to 6 carbon atoms or alkoxy from 1 to 6 carbon atoms.

10. The pigment dispersion resin of Claim 9, wherein the molecular weight of the reaction product of said aromatic diglycidyl ether and said bis-aryl alcohol or aromatic diol is from 300 to 3000.

11. The pigment dispersion resin of Claim 10 which has a total molecular weight from 1500 to 6000.

12. The pigment dispersion resin of Claim 10, wherein said aromatic diglycidyl ether comprises the diglycidyl ether of bisphenol A.

13. The pigment dispersion resin of Claim 1, wherein said primary amine comprises a mixture of dimethylaminopropylamine and an amino polyalkoxy alcohol in a ratio of 1:0.4 to 1:5.

14. The pigment dispersion resin of Claim 1, wherein said monoepoxide comprises nonylphenolglycidyl ether.

15. The pigment dispersion resin of Claim 1, wherein said bis-aryl alcohol or aromatic diol comprises one or more of hydroquinone, bisphenol A, or resorcinol.

16. The pigment dispersion resin of Claim 15 which is neutralized to a pH of 6.

17. The pigment dispersion resin of Claim 1 which is neutralized to a pH corresponding to the pH of a principal resin to which it is to be added.

18. Pigment paste comprising the pigment dispersion resin of Claim 1 combined with one or more pigments.

19. A pigment dispersion resin comprising the reaction product of:
(A) the reaction product of
(i) an aromatic diglycidyl ether having the formula 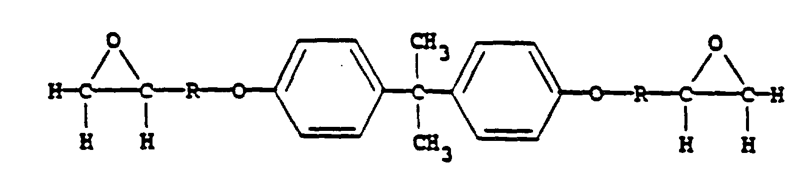 wherein R is alkyeline having from 1 to 8 carbon atoms and
(ii) a bis-aryl alcohol or aromatic diol; and
(B) a fatty amine; and
(C) a monoepoxide having the formula 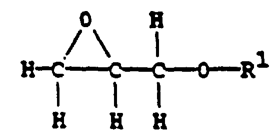
wherein R1 is alkyl having from 4 to 24 carbon atoms or aryl substituted with a straight or branched chain of from 4 to 24 carbon atoms.

20. The pigment dispersion resin of Claim 19, further comprising a diamine, an aminopolyalkoxy alcohol, or a mixture thereof.

21. The pigment dispersion resin of Claim 19, wherein the molecular weight of the reaction product of said aromatic diglycidyl ether and said bis-aryl alcohol or aromatic diol is from 300 to 3000.

22. The pigment dispersion resin of Claim 21, which has a total molecular weight of from 1500 to 6000.

23. The pigment dispersion resin of Claim 22, which is neutralized to a pH of 6.

24. The pigment dispersion resin of Claim 19, wherein the ratio of said fatty amine to said reaction product of said aromatic diglycidyl ether and said bis-aryl alcohol or aromatic diol is from 0.6:1 to 1.2:1.

25. The pigment dispersion resin of Claim 19 which is neutralized to a pH corresponding to the pH of a principal resin to which it is to be added.

26. The pigment dispersion resin of Claim 21, wherein said aromatic diglycidyl ether comprises the diglycidyl ether of bisphenol A.

27. The pigment dispersion resin of Claim 24 wherein said bis-aryl alcohol or aromatic diol has the formula HO-Ar-OH, wherein Ar is selected from the group consisting of phenylene, phenylene substituted with halogen, alkoxy of 1 to 6 carbon atoms, or alkyl of 1 to 6 carbon atoms, naphthalene, polyphenylene having two or three phenylenes linked by carbon-carbon bonds or alkylene groups of 1 to 5 carbon atoms, and naphthalene or polyphenylene substituted with halogen, alkoxy from 1 to 6 carbon atoms, or alkyl from 1 to 6 carbon atoms.

28. The pigment dispersion resin of Claim 27, wherein said bis-aryl alcohol or aromatic diol comprises one or more of hydroquinone, bisphenol A, or resorcinol.

29. The pigment dispersion resin of Claim 19, wherein said fatty amine comprises an aliphatic amine of from 7 to 24 carbon atoms and ethoxylated derivatives thereof.

30. Pigment paste comprising the pigment dispersion resin of Claim 19 combined with one or more pigments.

31. A cathodic electrodeposition bath, comprising the pigment grind resin of claim 1. wherein said pigment grind resin is neutralized before its addition to said bath to a pH corresponding to the principal resin in said bath.

32. A pigment dispersion resin according to claim 1, comprising the reaction product of
(A) the reaction product of the diglycidyl ether of bisphenol A and a bis-aryl alcohol or aromatic diol selected from the group consisting of one or more of bisphenol A, hydroquinone and resorcinol, in a ratio from 8:1 to 1.2:1 of said diglycidyl ether of bisphenol A to said bis-aryl alcohol or aromatic alcohol;
(B) a primary amine selected from the group consisting of one or more of a diamine, an amino alcohol, an aminopolyalkoxy alcohol, and a fatty amine; the ratio of (A) to (B) being from 0.6:1 to 1.2:1; and
(C) a monoepoxide , the ratio of said primary amine to said monoepoxide being from 1.4 to 2.4 equivalents primary amine to monoepoxide.

33. A coating composition for metal substrates comprising
(A) a principal resin;
(B) a cross-linking agent selected from the group consisting of blocked isocyanates, blocked polyisocyanurates, transesterification compounds, transamidation compounds, aminoplasts, and mixtures thereof;
(C) a grind resin comprising the reaction product of
(i) the reaction product of
(a) an aromatic diglycidyl ether having the formula 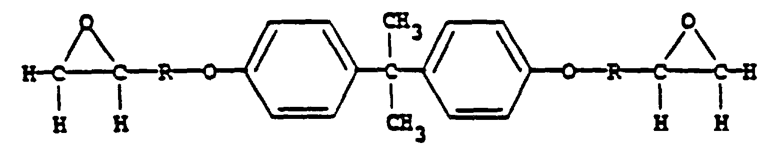 wherein R is alkandiyl having 1 to 8 carbon atoms , and
(b) a bis-aryl alcohol or aromatic diol;
(ii) a primary amine; and
(iii) a monoepoxide having the formula 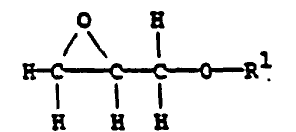 wherein R¹ is alkyl having from 4 to 24 carbon atoms or aryl substituted with a straight or branched chain of from 4 to 24 carbon atoms; and
(D) a pigment.

34. A coating composition according to Claim 33 further including a plasticizer.

35. An article electrocoated, at least in part, by a composition according to each of the Claims 1-34.

36. The coating composition of Claim 33 vherein said grind resin comprises the ingredients set forth in Claims 2-18.

## Patentansprüche

1. Pigmentdispersionsharze bestehend aus dem Umsetzungsprodukt aus
(A) dem Umsetzungsprodukt aus
(i) einem aromatischen Diglycidylether der Formel 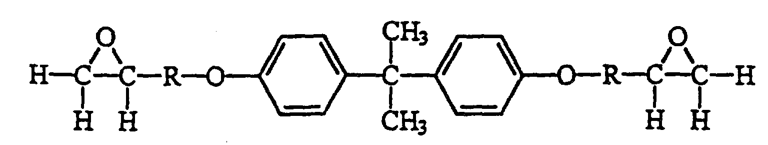 worin R Alkandiyl mit 1 bis 8 Kohlenstoffatomen bedeutet, und
(ii) einem Diarylalkohol bzw. einem aromatischen Diol,
(B) einem primären Amin und
(C) einem Monoepoxid der Formel 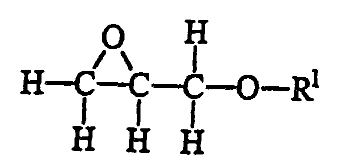 worin R¹ Alkyl mit 4 bis 24 Kohlenstoffatomen oder mit einer geraden oder verzweigten Kette von 4 bis 24 Kohlenstoffatomen substituiertes Aryl bedeutet.

2. Pigmentdispersionsharze nach Anspruch 1, wobei das primäre Amin aus der Gruppe bestehend aus einem oder mehreren Diaminen, Aminoalkoholen, Aminopolyalkoxyalkoholen und Fettaminen ausgewählt ist.

3. Pigmentdispersionsharze nach Anspruch 2, wobei das Verhältnis von primärem Amin zu Monoepoxid 1 bis 10 Äquivalente primäres Amin zu 1 Äquivalent Monoepoxid beträgt.

4. Pigmentdispersionsharze nach Anspruch 3, wobei das Verhältnis von primärem Amin zu Monoepoxid 1,7 Äquivalente primäres Amin zu 1 Äquivalent Monoepoxid beträgt.

5. Pigmentdispersionsharze nach Anspruch 1, wobei das Verhältnis von primärem Amin zu dem Umsetzungsprodukt aus aromatischem Diglycidylether und Diarylalkohol bzw. aromatischen Diol 0,6:1 bis 1,2:1 beträgt.

6. Pigmentdispersionsharze nach Anspruch 5, wobei das primäre Amin aus einer Mischung aus einem oder mehreren Diaminen und einem oder mehreren Aminoalkoholen bzw. Aminopolyalkoxyalkoholen in einem Verhältnis von 1:0,4 bis 1:5 besteht.

7. Pigmentdispersionsharze nach Anspruch 6, wobei das Verhältnis von Aminoalkohol bzw. Aminopolyalkoxyalkohol zu Diamin 1:0,67 bis 1:1,5 beträgt.

8. Pigmentdispersionsharze nach Anspruch 2, wobei das Verhältnis von aromatischen Diglycidylether zu Diarylalkohol bzw. aromatischem Diol 8:1 bis 1,2:1 beträgt.

9. Pigmentdispersionsharze nach Anspruch 1, wobei der Diarylalkohol bzw. das aromatische Diol die Formel HO-Ar-OH aufweist, worin Ar aus der Gruppe bestehend aus Phenylen, mit Halogen, Alkyl mit 1 bis 6 Kohlenstoffatomen oder Alkoxy mit 1 bis 6 Kohlenstoffatomen substituiertem Phenylen, Naphthalin, Polyphenylen, das zwei oder drei über Kohlenstoff-Kohlenstoff-Bindungen oder Alkylengruppen mit 1 bis 5 Kohlenstoffatomen miteinander verknüpfte Phenylene aufweist, und mit Halogen, Alkyl mit 1 bis 6 Kohlenstoffatomen oder Alkoxy mit 1 bis 6 Kohlenstoffatomen substituiertem Naphthalin oder Polyphenylen ausgewählt ist.

10. Pigmentdispersionsharze nach Anspruch 9, wobei das Molekulargewicht des Umsetzungsprodukts aus aromatischem Diglycidylether und Diarylalkohol bzw. aromatischem Diol 300 bis 3000 beträgt.

11. Pigmentdispersionsharze nach Anspruch 10 mit einem Gesamtmolekulargewicht von 1500 bis 6000.

12. Pigmentdispersionsharze nach Anspruch 10, wobei der aromatische Diglycidylether aus dem Diglycidylether von Bisphenol-A besteht.

13. Pigmentdispersionsharze nach Anspruch 1, wobei das primäre Amin aus einer Mischung aus Dimethylaminopropylamin und einem Aminopolyalkoxyalkohol in einem Verhältnis von 1:0,4 bis 1:5 besteht.

14. Pigmentdispersionsharze nach Anspruch 1, wobei das Monoepoxid aus Nonylphenolglycidylether besteht.

15. Pigmentdispersionsharze nach Anspruch 1, wobei der Diarylalkohol bzw. das aromatische Diol aus einer oder mehreren Verbindungen ausgewählt aus Hydrochinon, Bisphenol-A und Resorcin besteht.

16. Pigmentdispersionsharze nach Anspruch 15, die auf einen pH-Wert von 6 neutralisiert werden.

17. Pigmentdispersionsharze nach Anspruch 1, die auf einen pH-Wert neutralisiert werden, der dem pH-Wert eines Hauptharzes entspricht, zu dem sie zugegeben werden sollen.

18. Pigmentpasten, enthaltend Pigmentdispersionsharze nach Anspruch 1, zu denen ein oder mehrere Pigmente zugegeben wurden.

19. Pigmentdispersionsharze bestehend aus dem Umsetzungsprodukt aus
(A) dem Umsetzungsprodukt aus
(i) einem aromatischen Diglycidylether der Formel 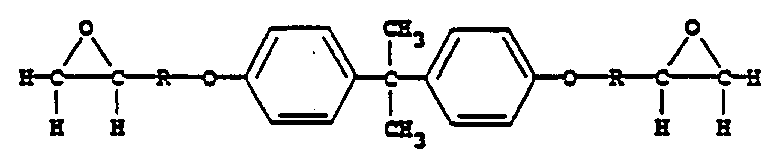 worin R Alkandiyl mit 1 bis 8 Kohlenstoffatomen bedeutet, und
(ii) einem Diarylalkohol bzw. einem aromatischen Diol und
(B) einem Fettamin und
(C) einem Monoepoxid der Formel 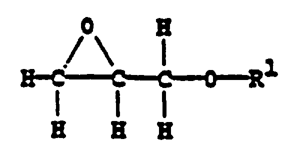
worin R¹ Alkyl mit 4 bis 24 Kohlenstoffatomen oder mit einer geraden oder verzweigten Kette von 4 bis 24 Kohlenstoffatomen susbstituiertes Aryl bedeutet.

20. Pigmentdispersionsharze nach Anspruch 19, die weiterhin ein Diamin, einen Aminopolyalkoxyalkohol oder deren Mischung enthalten.

21. Pigmentdispersionsharze nach Anspruch 19, wobei das Molekulargewicht des Umsetzungsprodukts aus aromatischem Diglycidylether und Diarylalkohol bzw. aromatischem Diol 300 bis 3000 beträgt.

22. Pigmentdispersionsharze nach Anspruch 21 mit einem Gesamtmolekulargewicht von 1500 bis 6000.

23. Pigmentdispersionsharze nach Anspruch 22, die auf einen pH-Wert von 6 neutralisiert werden.

24. Pigmentdispersionsharze nach Anspruch 19, wobei das Verhältnis von Fettamin zu dem Umsetzungsprodukt aus aromatischen Diglycidylether und Diarylalkohol bzw. aromatischem Diol 0,6:1 bis 1,2:1 beträgt.

25. Pigmentdispersionsharze nach Anspruch 19, die auf einen pH-Wert neutralisiert werden, der dem pH-Wert eines Hauptharzes entspricht, zu dem sie zugegeben werden sollen.

26. Pigmentdispersionsharze nach Anspruch 21, wobei der aromatische Diglycidylether aus dem Diglycidylether von Bisphenol-A besteht.

27. Pigmentdispersionsharze nach Anspruch 24, wobei der Diarylalkohol bzw. das aromatische Diol die Formel HO-Ar-OH aufweist, worin Ar aus der Gruppe bestehend aus Phenylen, mit Halogen, Alkoxy mit 1 bis 6 Kohlenstoffatomen oder Alkyl mit 1 bis 6 Kohlenstoffatomen substituiertem Phenylen, Naphthalin, Polyphenylen, das zwei oder drei über Kohlenstoff-Kohlenstoff-Bindungen oder Alkylengruppen mit 1 bis 5 Kohlenstoffatomen miteinander verknüpfte Phenylene aufweist, und mit Halogen, Alkoxy mit 1 bis 6 Kohlenstoffatomen oder Alkyl mit 1 bis 6 Kohlenstoffatomen substituiertem Naphthalin oder Polyphenylen ausgewählt ist.

28. Pigmentdispersionsharze nach Anspruch 27, wobei der Diarylalkohol bzw. das aromatische Diol aus einer oder mehreren Verbindungen ausgewählt aus Hydrochinon, Bisphenol-A und Resorcin besteht.

29. Pigmentdispersionsharze nach Anspruch 19, wobei das Fettamin aus einem aliphatischen Amin mit 7 bis 24 Kohlenstoffatomen und deren ethoxylierten Derivaten besteht.

30. Pigmentpasten, enthaltend Pigmentdispersionsharze nach Anspruch 19, zu denen ein oder mehrere Pigmente zugegeben wurden.

31. Kathodisch abscheidbares Elektrotauchlackierbad, enthaltend Pigmentanreibharze nach Anspruch 1, wobei die Pigmentanreibharze vor der Zugabe zum Bad auf einen pH-Wert neutralisiert werden, der dem des Hauptharzes in dem Bad entspricht.

32. Pigmentdispersionsharze nach Anspruch 1, bestehend aus dem Umsetzungsprodukt aus
(A) dem Umsetzungsprodukt aus dem Diglycidylether von Bisphenol-A und einem Diarylalkohol bzw. einem aromatischen Diol, der bzw. das ausgewählt ist aus der Gruppe bestehend aus einer oder mehreren Verbindungen ausgewählt aus Bisphenol-A, Hydrochinon und Resorcin, in einem Verhältnis von Bisphenol-A-Diglycidylether zu Diarylalkohol bzw. aromatischem Diol von 8:1 bis 1,2:1,
(B) einem primären Amin ausgewählt aus der Gruppe bestehend aus einem oder mehreren Diaminen, Aminoalkoholen, Aminopolyalkoxyalkoholen und Fettaminen, wobei das Verhältnis von (A) zu (B) 0,6:1 bis 1,2:1 beträgt, und
(C) einem Monoepoxid, wobei das Verhältnis von primärem Amin zu Monoepoxid 1,4 bis 2,4 Äquivalente primäres Amin zu 1 Äquivalent Monoepoxid beträgt.

33. Beschichtungszusammensetzungen für Metallsubstrate, enthaltend
(A) ein Hauptharz,
(B) ein Vernetzungsmittel, ausgewählt aus der Gruppe bestehend aus blockierten Isocyanaten, blockierten Polyisocyanuraten, Veresterungsverbindungen, Transamidierungsverbindungen, Aminoplasten und deren Mischungen,
(C) ein Anreibharz bestehend aus dem Umsetzungsprodukt aus
(i) dem Umsetzungsprodukt aus
(a) einem aromatischen Diglycidylether der Formel 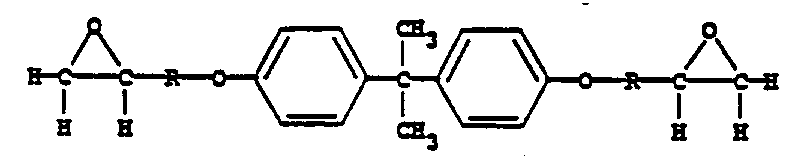 worin R Alkandiyl mit 1 bis 8 Kohlenstoffatomen bedeutet, und
(b) einem Diarylalkohol bzw. einem aromatischen Diol,
(ii) einem primären Amin und
(iii) einem Monoepoxid der Formel 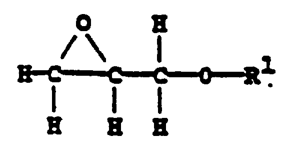 worin R¹ Alkyl mit 4 bis 24 Kohlenstoffatomen oder mit einer geraden oder verzweigten Kette von 4 bis 24 Kohlenstoffatomen substituiertes Aryl bedeutet und
(D) ein Pigment.

34. Beschichtungszusammensetzungen nach Anspruch 33, die weiterhin einen Weichmacher enthalten.

35. Gegenstand, auf dem zumindest z.T. eine Zusammensetzung nach einem der Ansprüche 1 bis 34 als Elektrotauchlack abgeschieden wurde.

36. Beschichtungszusazmensetzungen nach Anspruch 33, wobei das Anreibharz die in den Ansprüchen 2-18 genannten Bestandteile enthält.

## Revendications

1. Résine de dispersion de pigments comprenant le produit de réaction:
(A) du produit de réaction
(i) d'un ou de plusieurs éthers diglycidyliques aromatiques répondant à la formule 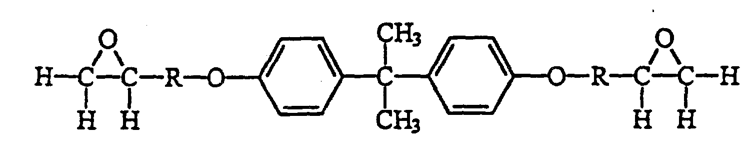 dans laquelle R représente un groupe alcanediyle comportant 1 à 8 atomes de carbone, et
(ii) d'un ou de plusieurs alcools bis-aryliques ou diols aromatiques;
(B) d'une ou de plusieurs amines primaires; et
(C) d'un ou de plusieurs monoépoxydes répondant à la formule 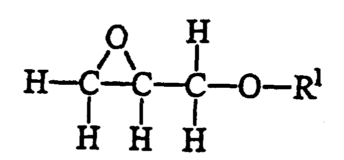
dans laquelle R¹ représente un groupe alkyle comportant 4 à 24 atomes de carbone ou un groupe aryle substitué par une chaîne droite ou ramifiée de 4 à 24 atomes de carbone.

2. Résine de dispersion de pigments selon la revendication 1, dans laquelle ladite amine primaire est choisie dans le groupe constitué par un ou plusieurs composés parmi une diamine, un aminoalcool, un aminopolyalcoxyalcool et une amine grasse.

3. Résine de dispersion de pigments selon la revendication 2, dans laquelle le rapport de ladite amine primaire audit monoépoxyde est de 1 à 10 équivalents d'amine primaire pour 1 équivalent de monoépoxyde.

4. Résine de dispersion de pigments selon la revendication 3, dans laquelle le rapport de ladite amine primaire audit monoépoxyde est de 1,7 équivalents d'amine primaire pour 1 équivalent de monoépoxyde.

5. Résine de dispersion de pigments selon la revendication 1, dans laquelle le rapport de ladite amine primaire audit produit de réaction dudit éther diglycidylique aromatique et audit alcool bis-arylique ou diol aromatique est de 0,6:1 à 1,2:1.

6. Résine de dispersion de pigments selon la revendication 5, dans laquelle ladite amine primaire comprend un mélange d'une ou de plusieurs diamines et d'un ou de plusieurs aminoalcools ou aminopolyalcoxyalcools, dans un rapport de 1:0,4 à 1:5.

7. Résine de dispersion de pigments selon la revendication 6, dans laquelle le rapport dudit aminoalcool ou dudit aminopolyalcoxyalcool à ladite diamine est de 1:0,67 à 1:1,5.

8. Résine de dispersion de pigments selon la revendication 2, dans laquelle le rapport dudit éther diglycidylique aromatique audit alcool bis-arylique ou diol aromatique est de 8:1 à 1,2:1.

9. Résine de dispersion de pigments selon la revendication 1, dans laquelle ledit alcool bis-arylique ou diol aromatique a pour formule HO-Ar-OH, dans laquelle Ar est choisi dans l'ensemble constitué par les groupes phénylène; phénylène substitué par un atome d'halogène, par un groupe alkyle de 1 à 6 atomes de carbone ou par un groupe alcoxy de 1 à 6 atomes de carbone; naphtalène; polyphénylène contenant deux ou trois groupes phénylène liés par des liaisons carbone-carbone ou des groupes alkylène comportant 1 à 5 atomes de carbone; et naphtalène ou polyphénylène, substitué par un atome d'halogène ou par un groupe alkyle de 1 à 6 atomes de carbone, ou par un groupe alcoxy de 1 à 6 atomes de carbone.

10. Résine de dispersion de pigments selon la revendication 9, dans laquelle la masse moléculaire du produit de réaction dudit éther diglycidylique aromatique et dudit alcool bis-arylique ou diol aromatique est de 300 à 3 000.

11. Résine de dispersion de pigments selon la revendication 10, qui possède une masse moléculaire totale de 1 500 à 6 000.

12. Résine de dispersion de pigments selon la revendication 10, dans laquelle ledit éther diglycidylique aromatique comprend l'éther diglycidylique de bisphénol A.

13. Résine de dispersion de pigments selon la revendication 1, dans laquelle ladite amine primaire comprend un mélange de diméthylaminopropylamine et d'un aminopolyalcoxyalcool, dans un rapport de 1:0,4 à 1:5.

14. Résine de dispersion de pigments selon la revendication 1, dans laquelle ledit monoépoxyde comprend l'éther glycidylique du nonylphénol.

15. Résine de dispersion de pigments selon la revendication 1, dans laquelle ledit alcool bis-arylique ou diol aromatique comprend un ou plusieurs composés parmi l'hydroquinone, le bisphénol A ou le résorcinol.

16. Résine de dispersion de pigments selon la revendication 15, qui est neutralisée jusqu'à pH 6.

17. Résine de dispersion de pigments selon la revendication 1, qui est neutralisée jusqu'à un pH correspondant au pH d'une résine principale à laquelle elle est destinée à être ajoutée.

18. Pâte pigmentaire comprenant la résine de dispersion de pigments de la revendication 1 combinée avec un ou plusieurs pigments.

19. Résine de dispersion de pigments comprenant le produit de réaction:
(A) du produit de réaction.
(i) d'un éther diglycidylique aromatique répondant à la formule 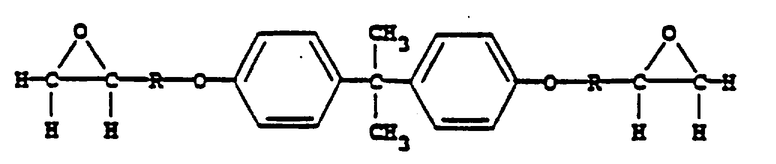 dans laquelle R représente un groupe alcanediyle comportant 1 à 8 atomes de carbone, et
(ii) d'un ou de plusieurs alcools bis-aryliques ou diols aromatiques;
(B) d'une amine grasse; et
(C) d'un monoépoxyde répondant à la formule 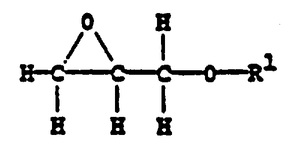
dans laquelle R¹ représente un groupe alkyle comportant 4 à 24 atomes de carbone ou un groupe aryle substitué par une chaîne droite ou ramifiée de 4 à 24 atomes de carbone.

20. Résine de dispersion de pigments selon la revendication 1, comprenant en outre une diamine, un aminopolyalcoxyalcool, ou un mélange de ceux-ci.

21. Résine de dispersion de pigments selon la revendication 19, dans laquelle la masse moléculaire du produit de réaction dudit éther diglycidylique aromatique et dudit alcool bis-arylique ou diol aromatique est de 300 à 3 000.

22. Résine de dispersion de pigments selon la revendication 21, qui possède une masse moléculaire totale de 1 500 à 6 000.

23. Résine de dispersion de pigments selon la revendication 22, qui est neutralisée jusqu'à un pH de 6.

24. Résine de dispersion de pigments selon la revendication 19, dans laquelle le rapport de ladite amine grasse audit produit de réaction dudit éther diglycidylique aromatique et dudit alcool bis-arylique ou diol aromatique est de 0,6:1 à 1,2:1.

25. Résine de dispersion de pigments selon la revendication 19, qui est neutralisée jusqu'à un pH correspondant au pH d'une résine principale à laquelle elle est destinée à être ajoutée.

26. Résine de dispersion de pigments selon la revendication 21, dans laquelle ledit éther diglycidylique aromatique comprend l'éther diglycidylique de bisphénol A.

27. Résine de dispersion de pigments selon la revendication 24, dans laquelle ledit alcool bis-arylique ou diol aromatique a pour formule HO-Ar-OH, dans laquelle Ar est choisi dans l'ensemble constitué par les groupes phénylène; phénylène substitué par un atome d'halogène, par un groupe alcoxy de 1 à 6 atomes de carbone ou par un groupe alkyle de 1 à 6 atomes de carbone; naphtalène; polyphénylène contenant deux ou trois groupes phénylène liés par des liaisons carbone-carbone ou des groupes alkylène comportant 1 à 5 atomes de carbone; et naphtalène ou polyphénylène, substitué par un atome d'halogène ou par un groupe alcoxy de 1 à 6 atomes de carbone, ou par un groupe alkyle de 1 à 6 atomes de carbone.

28. Résine de dispersion de pigments selon la revendication 27, dans laquelle ledit alcool bis-arylique ou diol aromatique comprend un ou plusieurs composés parmi l'hydroquinone, le bisphénol A ou le résorcinol.

29. Résine de dispersion de pigments selon la revendication 19, dans laquelle ladite amine grasse comprend une amine aliphatique de 7 à 24 atomes de carbone et ses dérivés éthoxylés.

30. Pâte pigmentaire comprenant la résine de dispersion de pigments de la revendication 19 combinée avec un ou plusieurs pigments.

31. Bain d'électrodéposition cathodique, comprenant la résine de dispersion de pigments de la revendication 1, dans lequel ladite résine de dispersion de pigments est neutralisée avant son addition audit bain jusqu'à un pH correspondant à la résine principale dans ledit bain.

32. Résine de dispersion de pigments selon la revendication 1, comprenant le produit de réaction
(A) du produit de réaction de l'éther diglycidylique de bisphénol A et d'un alcool bis-arylique ou d'un diol aromatique choisi dans le groupe constitué d'un ou plusieurs composés parmi le bisphénol A, l'hydroquinone et le résorcinol, dans un rapport de 8:1 à 1,2:1 dudit éther diglycidylique de bisphénol A audit alcool bis-arylique ou alcool aromatique;
(B) d'une amine primaire choisie dans le groupe constitué par un ou plusieurs composés parmi une diamine, un aminoalcool, un aminopolyalcoxyalcool et une amine grasse; le rapport de (A) à (B) étant de 0,6:1 à 1,2:1; et
(C) d'un monoépoxyde, le rapport de ladite amine primaire audit monoépoxyde étant de 1,4 à 2,4 équivalents d'amine primaire pour 1 équivalent de monoépoxyde.

33. Composition de revêtement de substrats métalliques, comprenant:
(A) une résine principale;
(B) un agent de réticulation choisi dans le groupe constitué par les isocyanates bloqués, les polyisocyanurates bloqués, les composés de transestérification, les composés de transamidation, les aminoplastes, et leurs mélanges;
(C) une résine de dispersion comprenant le produit de réaction
(i) du produit de réaction
(a) d'un éther diglycidylique aromatique répondant à la formule 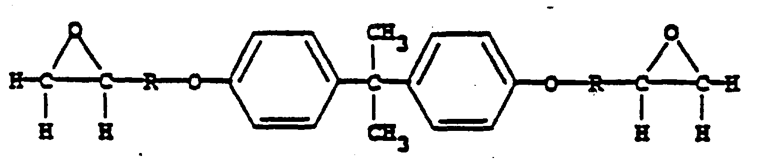 dans laquelle R représente un groupe alcanediyle comportant 1 à 8 atomes de carbone, et
(b) d'un alcool bis-arylique ou diol aromatique;
(ii) d'une amine primaire; et
(iii) d'un monoépoxyde répondant à la formule 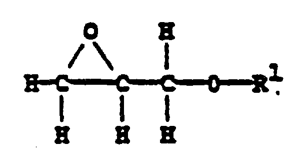 dans laquelle R¹ représente un groupe alkyle comportant 4 à 24 atomes de carbone ou un groupe aryle substitué par une chaîne droite ou ramifiée de 4 à 24 atomes de carbone; et
(D) d'un pigment.

34. Composition de revêtement selon la revendication 33, renfermant, en outre, un plastifiant.

35. Article revêtu par électrodéposition, au moins en partie, d'une composition selon l'une quelconque des revendications 1-34.

36. Composition de revêtement selon la revendication 33, dans laquelle ladite résine de dispersion comprend les ingrédients définis dans les revendications 2-18.
